# EUROPEAN PATENT SPECIFICATION

(11) **EP 1 753 189 B1**
(45) Date of publication and mention of the grant of the patent: **16.03.2011**
(21) Application number: 05808312.2
(22) Date of filing: 10.11.2005
(51) Int. Cl.: H04L 29/06, H04L 29/12, H04W 80/04, H04W 92/24

(54) **A METHOD FOR COMMUNICATING BETWEEN SGSN NODES**
VERFAHREN ZUR KOMMUNIKATION ZWISCHEN SGSN-KNOTEN
PROCEDE DE COMMUNICATION ENTRE NOEUDS SGSN

(30) Priority: 10.11.2004 CN 200410092738
(43) Date of publication of application: 14.02.2007
(73) Proprietor: Huawei Technologies Co., Ltd., Longgang District, Shenzhen Guangdong 518129 (CN)
(72) Inventor: HUANG, Hua, Shenzhen, Guangdong 518129 (CN)
(74) Representative: Reinhard - Skuhra - Weise & Partner GbR
(86) International application number: PCT/CN2005/001900
(87) International publication number: WO 2006/050672

(56) References cited:
- WO-A-03/032604
- WO-A-03/032668
- CN-A- 1 490 998
- KR-A- 2003 075 237
- US-A1- 2004 162 909

## Description

### Field of the Invention

The present invention relates to a method for communicating between Packet Switched (PS) domain network nodes in a 3G mobile communication system, and particularly, to a method for communicating between Serving General Packet Radio Service (GPRS) Support Nodes (SGSNs).

### Background of the Invention

A 3G mobile communication system adopting a Wideband Code Division Multiple Access (WCDMA) radio interface technique includes a Radio Access Network and a core network. The core network is divided logically into a Circuit Switched (CS) domain and a Packet Switched (PS) domain. A GPRS Support Node (GSN) is the primary network node in the PS domain, including functions needed to support a GPRS. There are two types of GSNs: a Serving GSN (SGSN) and a Gateway GSN (GGSN).

The SGSN is a function node in the PS domain of a WCDMA core network, connected through interfaces to network elements, such as a Radio Network Controller (RNC), a GGSN, a Home Location Register/Authentication Center (HLR/AUC), a Mobile Switching Center/Visitor Location Register (MSC/VLR) and so on, and connected through Gn/Gp interfaces to other SGSNs. The main functions of an SGSN include route forwarding, mobility management, session management, authentication, encryption, etc.

The interface between the SGSN and the GGSN is based on GPRS Tunneling Protocol (GTP) to realize tunneling transfer functions. GTP includes a GTP-Control plane (GTP-C) to manage tunnels and implement transfer functions of other signaling messages, and a GTP-User plane (GTP-U) to transfer data packages on the user plane. Data packages on the user plane can be packet data packages transferred in discrete mode. Protocols for transferring the packet data packages in discrete mode, such as Internet Protocol (IP) and X.25 Protocol, are jointly called Packet Data Protocol (PDP). PDP may be used in the interaction between an external data network and a core network, and the interaction between different core networks. PDP Context is an information set saved in a Mobile Station (MS) and a GSN for a session.

In 3GPP releases before 3GPP R.5, GTP messages were encapsulated using the IPv4 and the GSN address cell in a GTP message contained an IPv4 address. In 3GPP R.5 and follow-up 3GPP releases, it is required that a GTP message should be able to be encapsulated using the IPv6 and the GSN address cell in a GTP message should contain an IPv6 address, i.e., GTP communications between GSNs using the IPv6 should be supported.

Currently, communication networks are in a transition period from the IPv4 to the IPv6, and an overall update of GSNs from the IPv4 to the IPv6 in the networks has to be performed step by step since the IPv4 is adopted by all GSNs in current networks. In a network where IPv6 GSNs and IPv4 GSNs coexist, an updated GSN should support both GTP based on the IPv4 and those based on the IPv6 at the same time to ensure compatibility of the network. Such a GSN is called an IPv4/IPv6 dual-stack GSN or a Type C GSN while a GSN supporting only GTP messages based on the IPv4 is called an IPv4 single-stack GSN or a Type A GSN. In the latest 3GPP TS 29.060 v6.1.0, a communication solution for Type C GSN is described, including the steps of: setting an IPv4 address and an IPv6 address in a Type C GSN, detecting GTP messages by the Type C GSN at both its own IPv4 address and its own IPv6 address at the same time, receiving IPv4-encapsulated GTP messages and IPv6-encapsulated GTP messages respectively, and encapsulating the GTP messages using the IP of corresponding version.

However, the latest 3GPP TS 29.060 v6.1.0 does not give a solution to an IPv4/IPv6 dual-stack GSN applied to communications based on the IPv6 between different SGSNs, but only the solution to an IPv4/IPv6 dual-stack GSN applied to communications based on the IPv6 between the SGSN and the GGSN. Therefore, IPv4/IPv6 dual-stack SGSNs cannot communicate with each other using the IPv6 in the current communication networks.

US 2003/156537 A1 discloses a method and system for providing an address transition if a connection point at one end of a connection is changed from a first network node to a second network node of a cellular network.

### Summary of the Invention

Embodiments of the present invention provide a method for communicating between SGSNs, which realizes communications between SGSNs supporting different IP versions so as to improve the compatibility of networks.

Particularly, the method further supports communications based on the IPv6 between IPv4/IPv6 dual-stack SGSNs, and ensures the communications between an IPv4/IPv6 dual-stack SGSN and another SGSN that does not support the IPv6, thus the compatibility of networks is improved.

The invention is defined in the independent claims.

Before obtaining the IP version of the IP address contained in the message,
determining by the source SGSN whether the message returned by the destination SGSN is received within a predetermined period of time;
if the message is received within a predetermined period of time, obtaining the IP version of the IP address contained in the message, and communicating with the destination SGSN using the IP version obtained subsequently;
if the message is not received within a predetermined period of time, sending by the source SGSN a communication message using the IPv4 version supported by both the source SGSN and all the routing related SGSNs, wherein the communication message contains an IP address of the highest IP version supported by the source SGSN and at least one of the routing related SGSNs; and continuing to determine by the source SGSN whether the message returned by the destination SGSN is received within a predetermined period of time.

The IP addresses of the SGSNs are configured in a Domain Name Server (DNS) in accordance with network logical names of the SGSNs; the source SGSN searches the DNS according to the network logical names of the SGSNs to obtain the IP versions of the IP addresses of the SGSNs.

The communication initiated by the source SGSN to the destination SGSN is an inter-SGSN routing area update procedure; the source SGSN is a new SGSN and the destination SGSN is an old SGSN.

The communication initiated by the source SGSN to the destination SGSN is an inter-SGSN serving radio network controller relocation procedure; the source SGSN is an old SGSN and the destination SGSN is a new SGSN.

The method further includes:
inquiring, by the source SGSN, about an IP address list of the routing related SGSNs of the communication;
if there is only one routing related SGSN, determining that the routing related SGSN is a specific destination SGSN;
if there are more than one related SGSN, not determining the specific destination SGSN.

The communication message between the source SGSN and the destination SGSN includes a cell for carrying an IPv6 address.

Concluded from the above, during an inter-SGSN communication procedure according to the method provided by the embodiments of the present invention, the source SGSN sends a message to the destination SGSN using the IP version supported by both the source and destination SGSNs according to the IP version of the obtained IP address of the destination SGSN; the destination SGSN determines, upon receiving the message from the source SGSN, the IP version based on which it communicates with the source SGSN according to the IP version of the IP address of the source SGSN, and returns a message to the source SGSN using the determined IP version. Therefore, through the method provided by the embodiments, the IPv4 or the IPv6 is chosen for the communication in a network including both IPv4/IPv6 dual-stack SGSNs and IPv4 signal stack SGSNs, thus the communication between different IPv4/IPv6 dual-stack SGSNs or between the IPv4/IPv6 dual-stack SGSN and the SGSN that does not support the IPv6 is realized so as to improve the network compatibility; moreover, the communication between IPv4 signal stack SGSNs is not affected, thus no impact is made on the original network.

### Brief Description of the Drawings

Figure 1 is a simplified flowchart of a routing area update procedure in accordance with an embodiment of the present invention.
Figure 2 is a flowchart of communications between SGSNs in the routing area update procedure in accordance with an embodiment of the present invention.
Figure 3 is a flowchart illustrating how a new SGSN chooses an IP version of the communication protocol in the routing area update procedure in accordance with an embodiment of the present invention.
Figure 4 is a simplified flowchart of a Serving Radio Network Subsystem (SRNS) relocation procedure in accordance with an embodiment of the present invention.
Figure 5 is a flowchart of the inter-SGSN communications in the SRNS relocation procedure in accordance with an embodiment of the present invention.

### Embodiments of the Invention

Embodiments of the present invention are further described hereinafter with reference to accompanying drawings.

The core idea of the embodiments is: assigning, in advance to every SGSN, IP addresses of all IP versions that are supported by the SGSN, detecting the IP version supported by a destination SGSN when a source SGSN initiates communications with the destination SGSN, and communicating with the destination SGSN using the IP version supported by both the source and destination SGSNs according to a detection result.

The communication method includes the following the steps.

When the source SGSN determines a specific destination SGSN of the communication, the source SGSN inquires about an IP version of the IP address assigned to the destination SGSN in advance, and chooses, according to an inquiry result, the highest IP version that is supported by both the source SGSN and the destination SGSN for follow-up communication;

When the source SGSN cannot determine a specific destination SGSN of the communication, the communication method includes:
Step A: the source SGSN inquires about the IP versions of the IP addresses of all routing related SGSNs of the communication, chooses the lowest IP version supported by both the source SGSN and all related SGSNs according to an inquiry result; sends a communication message containing an IP address of the highest IP version supported by both the source SGSN and at least one related SGSN using the lowest IP version.
Step B: when the communication message is routed to the destination SGSN, the destination SGSN obtains the IP versions supported by the source SGSN according to the IP address and information contained in the communication message, and returns to the source SGSN a message containing an IP address of the highest IP version supported by both the source and the destination SGSNs.
Step C: upon receiving the message returned by the destination SGSN, the source SGSN obtains the IP version of the IP address contained in the message and communicates with the destination SGSN using the IP version obtained subsequently.

Current SGSNs usually support the IPv4 and/or the IPv6, so the SGSNs supporting the IPv4 and the IPv6 are taken as an example in the embodiments described herein; when SGSNs support multiple other protocol versions, the embodiments may be still implemented in the same way as described herein.

In the method provided by the embodiment, identities and corresponding IP addresses of SGSNs are configured in a Domain Name Server (DNS) in advance, if an SGSN supports only the IPv4, an IPv4 address is assigned to the SGSN; if an SGSN supports IPv4/IPv6 dual-stack protocols, both an IPv4 address and an IPv6 address are assigned to the SGSN. Corresponding relationship between the network logical name, the identity and IP address of an SGSN should also be configured according to signaling procedure design. For example, the network logical name can be a Radio Network Controller (RNC) identity and a Routing Area Identity (RAI).

There are many cases in which inter-SGSN communication is needed, e.g., there are mainly two types of intercommunications in Mobility Management (MM): a routing area update procedure and a Serving Radio Network Subsystem (SRNS) relocation procedure. The inter-SGSN communication method provided by the embodiment is described hereinafter, taking the routing area update procedure and the SRNS relocation procedure as examples.

The inter-SGSN communication in the routing area update procedure is described in Embodiment 1. In the procedure, the source SGSN which initiates the communication is a new SGSN, and the destination SGSN is an old SGSN.

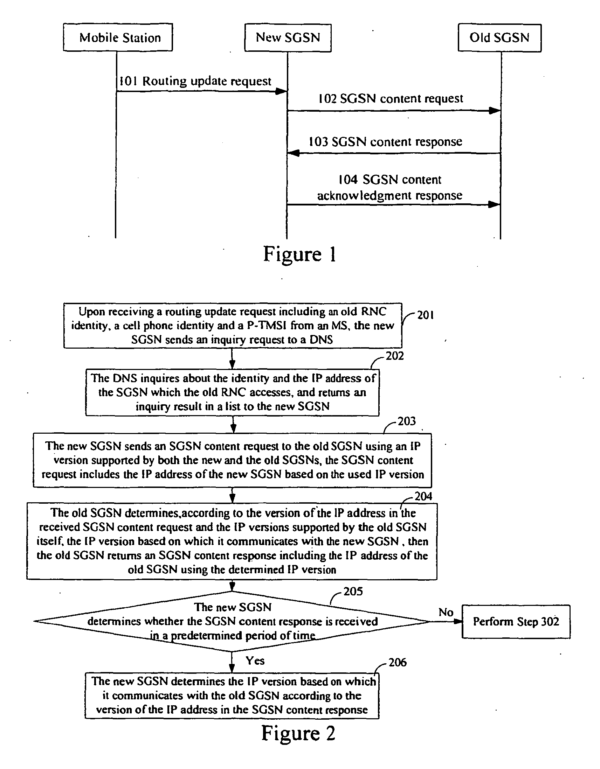

As shown in Figure 1, a brief procedure of the routing area update includes the steps of:
Step 101: when an inter-SGSN routing area update occurs in a Mobile Station (MS), the MS sends a routing update request to the new SGSN which the MS belongs to;
Step 102: upon receiving the routing update request, the new SGSN sends an SGSN content request to the old SGSN which the MS belongs to, obtains an MM context and a PDP context;
Step 103: upon receiving the SGSN content request, the old SGSN returns an SGSN content response containing the MM context and the PDP context to the new SGSN;
Step 104: upon receiving the SGSN content response, the new SGSN returns an SGSN content acknowledgement response to the old SGSN, indicating that the MM context and the PDP context have been received, and the routing area update procedure thus ends.

In the network including both IPv4/IPv6 dual-stack SGSNs and IPv4 single stack SGSNs, the new SGSN and the old SGSN have to negotiate further on the choice of IP versions. As shown in Figure 2, the inter-SGSN communication procedure in the routing area update procedure in Embodiment 1 includes the steps of:
Step 201: upon receiving a routing update request from the MS, the new SGSN sends an inquiry request to the DNS; the routing update request includes the old RAI of the old SGSN, MS identity and Packet-Temporary Mobile Subscriber Identity (P-TMSI) which serves as an SGSN allocation principle, and the inquiry request includes the old RNC identity and the old RAI.
Step 202: the DNS finds, according to the old RAI, the identity of the SGSN which the corresponding old RNC accesses, and further finds the IP address of the SGSN which the old RNC accesses, then the DNS puts the found SGSN identity and corresponding IP address in a list and returns to the new SGSN the list of the identity and corresponding IP address of the SGSN which the old RNC accesses.
Step 203: after receiving from the DNS the list of the identity and corresponding IP address of the SGSN which the old RNC accesses, the new SGSN sends an SGSN content request to the old SGSN using an IP version supported by both the new and the old SGSNs according to the IP versions supported by the new SGSN itself and the IP versions supported by the SGSN in the list, the SGSN content request includes the IP address of the new SGSN based on the used IP version.

The contents of cells in the SGSN content request in this embodiment are listed below in Table 1:

**Table 1**

| Cell | Presence requirement | Note |
|---|---|---|
| IMSI | Conditional | Existing Cell |
| Routing Area Identity (RAI) | Mandatory | Existing Cell |
| Temporary Logical Link Identifier (TLLI) | Conditional | Existing Cell |
| Packet TMSI (P-TMSI) | Conditional | Existing Cell |
| P-TMSI Signature | Conditional | Existing Cell |
| MS Validated | Optional | Existing Cell |
| Tunnel Endpoint Identifier Control Plane | Mandatory | Existing Cell |
| SGSN Address for Control Plane | Mandatory | Existing Cell |
| Alternative SGSN Address for Control Plane | Conditional | New Cell |
| Private Extension | Optional | Existing Cell |
| SGSN Number | Optional | Existing Cell |

As shown in Table 1, the contents and meanings of Existing Cells are the same as those in an SGSN content request in the prior art and are part of common technology which will not be described herein. However, an Alternative SGSN Address for Control Plane cell is added, on the basis of the prior art, into the SGSN content request in the embodiment to transfer an IPv6 address.

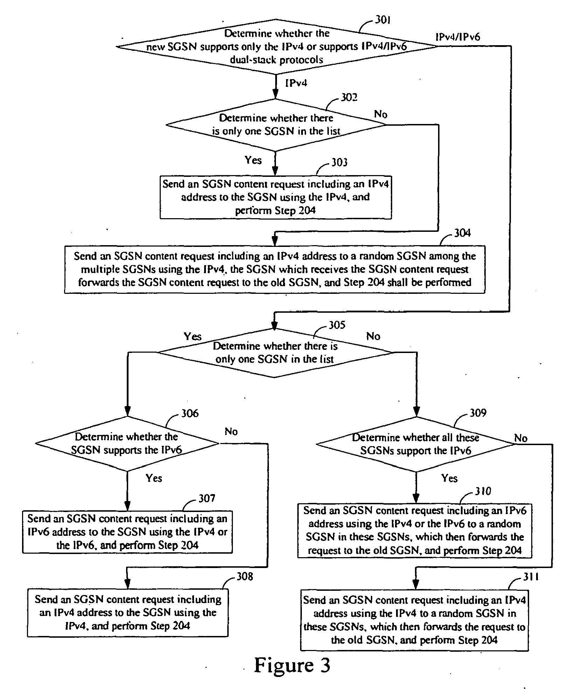

The detailed steps of Step 203 are shown in Figure 3, including:
Step 301: the new SGSN determines the IP versions supported by itself, if the new SGSN supports the IPv4 only, i.e., it is an IPv4 single stack SGSN, Step 302 shall be performed; if the new SGSN supports IPv4/IPv6 dual-stack protocols, i.e., it is an IPv4/IPv6 dual-stack SGSN, Step 305 shall be performed.
Step 302: determine whether there is only one SGSN in the list, if there is only one SGSN, determine that the only one SGSN is the specific destination SGSN, i.e., the old SGSN, and Step 303 shall then be performed; if there are more than one SGSN in the list, the specific destination SGSN cannot be determined and Step 304 shall be performed.
Step 303: the new SGSN sends an SGSN content request to the old SGSN using the IPv4, the request includes the IPv4 address of the new SGSN, and Step 204 shall then be performed.

When there are multiple SGSNs in the list, which means that the RNC accesses multiple SGSNs, the new SGSN obtains from the list multiple SGSNs, which are called an SGSN pool, and IP addresses of the multiple SGSNs, which are called an IP address pool. However, as the new SGSN cannot obtain the IP address of a specific old SGSN, the new SGSN sends the SGSN content request to a random SGSN in the SGSN pool which routes and forwards the request, thus Step 304 should be performed.

Step 304: the new SGSN sends an SGSN content request including the IPv4 address of the new SGSN to a random SGSN in the SGSN pool using the IPv4; the current SGSN which has received the SGSN content request obtains, according to the P-TMSI contained in the request and preset corresponding relationship between P-TMSIs and old SGSNs, the IP address of the old SGSN corresponding to the P-TMSI; if the current SGSN is the old SGSN, Step 204 shall be performed; otherwise, the current SGSN forwards the request to the old SGSN and Step 204 will be then performed.

The method through which an SGSN content request is forwarded to the old SGSN is part of common technology in the prior art, which will not be further described herein.

Step 305: the new SGSN determines whether there is only one SGSN in the list, and determines, if there is only one SGSN, that the SGSN is the old SGSN and Step 306 shall be performed; if there are more than one SGSN in the list, the specific old SGSN cannot be determined and Step 309 shall be performed.

Step 306: the new SGSN determines the IP version of the IP address of the old SGSN, if the IP address is based on the IPv4/IPv6 dual-stack version, Step 307 shall be performed; otherwise, Step 308 shall be performed.

Step 307: the new SGSN sends an SGSN content request including an IPv6 address to the old SGSN using the IPv4, and Step 204 shall then be performed; alternatively, the SGSN content request including an IPv6 address can also be sent using the IPv6.

Step 308: the new SGSN sends an SGSN content request including an IPv4 address to the old SGSN using the IPv4, and Step 204 shall then be performed.

Step 309: the new SGSN determines whether the IP addresses of all SGSNs in the SGSN pool are based on the IPv4/IPv6 dual-stack version, if they are, Step 310 shall be performed; otherwise, Step 311 shall be performed.

Step 310: the new SGSN sends an SGSN content request including at least the MS identity and P-TMSI to a random SGSN among the multiple SGSNs using the IPv4 or the IPv6, and the request includes an IPv6 address only, i.e., the SGSN Address for Control Plane cell in the request is filled with an IPv6 address and the Alternative SGSN Address for Control Plane cell is left blank; the current SGSN which has received the SGSN content request obtains, according to the P-TMSI contained in the request, the IP address of the old SGSN corresponding to the P-TMSI, if the current SGSN is the old SGSN, Step 204 shall be performed; otherwise, the current SGSN forwards the request to the old SGSN and Step 204 will be performed.

Step 311: the new SGSN sends an SGSN content request including at least the MS identity and P-TMSI to a random SGSN among the multiple SGSNs using the IPv4, and the request includes both an IPv4 address and an IPv6 address, i.e., the SGSN Address for Control Plane cell in the request is filled with an IPv4 address and the Alternative SGSN Address for Control Plane cell is filled with an IPv6 address. The current SGSN which has received the SGSN content request obtains, according to the P-TMSI contained in the request, the IP address of the old SGSN corresponding to the P-TMSI; if the current SGSN is the old SGSN, Step 204 shall be performed; otherwise, the current SGSN forwards the request to the old SGSN and Step 204 will be performed.

Step 204: upon receiving the SGSN content request, the old SGSN determines, according to the IP version of the IP address in the request and the IP version supported by the old SGSN itself, the IP version based on which it communicates with the new SGSN, then the old SGSN returns an SGSN content response using the determined IP version.

Step 204 can be performed in two ways.

If the old SGSN supports IPv4/IPv6 dual-stack protocols, it determines whether the SGSN content request includes an IPv6 address; if the request includes an IPv6 address, the old SGSN returns the SGSN content response including the IPv6 address of the old SGSN to the new SGSN using the IPv6; otherwise, the old SGSN returns the SGSN content response including the IPv4 address of the old SGSN to the new SGSN using the IPv4.

Optionally, if the old SGSN supports the IPv4 only, it returns the SGSN content response including the IPv4 address of the old SGSN to the new SGSN using the IPv4.

Step 205: the new SGSN determines whether the SGSN content response is received within a predetermined period of time; if yes, Step 206 shall be performed; otherwise, Step 302 shall be performed.

Step 206: the new SGSN determines the IP version based on which it communicates with the old SGSN according to the IP version of the IP address in the SGSN content response. Step 206 further includes the steps of: determining whether the IP address in the response is an IPv6 address; returning, if the IP address is an IPv6 address, the SGSN content acknowledgement response including an IPv6 user plane address to the old SGSN using the IPv6 and terminating the process; otherwise, returning the SGSN content acknowledgement response including an IPv4 user plane address to the old SGSN using the IPv6 and terminating the process.

In the above routing area update procedure, the new SGSN initiatively initiates the procedure of GTP signaling interaction communication with the old SGSN, while in an SRNS relocation procedure implemented according to the method provided in the embodiment, the old SGSN initiates the procedure of GTP signaling interaction communication with the new SGSN.

Inter-SGSN communication in an SRNS relocation procedure is described in Embodiment 2. In the procedure, the source SGSN initiating the communication is an old SGSN, and the destination SGSN is a new SGSN.

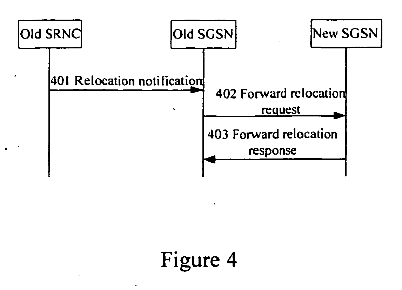

As shown in Figure 4, a brief SRNS relocation procedure includes the steps of:
Step 401: when the old Serving RNC (SRNC) which has ever served an MS decides to initiate an SRNS relocation procedure, the old SRNC sends a relocation notification including a new SRNC identity to the old SGSN.
Step 402: upon receiving the relocation notification, the old SGSN sends a Forward Relocation Request including the IMSI, MM context and PDP context to the new SGSN.
Step 403: upon receiving the Forward Relocation Request, the new SGSN returns a Forward Relocation Response including the control plane address of the new SGSN to the old SGSN.

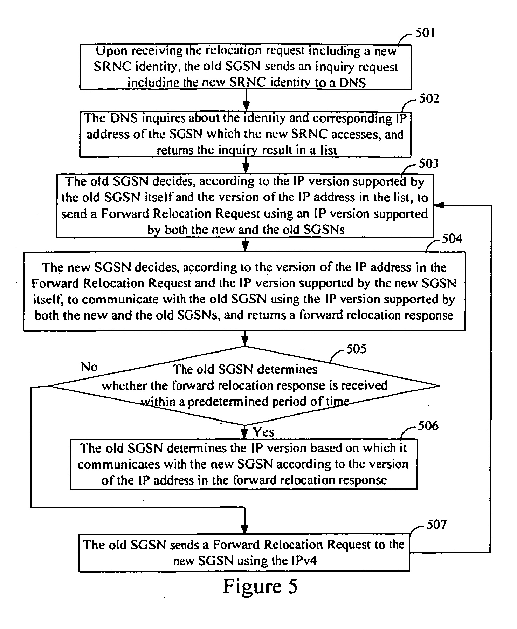

In a network including both IPv4/IPv6 dual-stack SGSNs and IPv4 single stack SGSNs, the new SGSN and the old SGSN have to negotiate further on the choice of IP versions. As shown in Figure 5, the inter-SGSN communication procedure in the SRNS relocation procedure in Embodiment 2 includes the steps of:
Step 501: upon receiving the relocation request including a new SRNC identity, the old SGSN sends an inquiry request including the new SRNC identity to the DNS.
Step 502: the DNS searches out the identity of the SGSN which the new SRNC accesses according to the new SRNC identity, and further searches out the IP address of the SGSN which the new SRNC accesses, then the DNS returns, in a list to the old SGSN, the identity and corresponding IP address of the SGSN which the new SRNC accesses.
Step 503: upon receiving the list returned by the DNS and including the identity and IP address of the SGSN which the new SRNC accesses, the old SGSN decides, according to the IP version supported by the old SGSN itself and the IP versions of the SGSN IP addresses in the list, to send a Forward Relocation Request to the new SGSN using an IP version supported by both the new and the old SGSNs.

An Alternative SGSN Address for Control Plane cell is also added into the Forward Relocation Request of the prior art to transfer an IPv6 address so that the IPv6 is supported in this procedure.

The SGSN relocation procedure is different from the SGSN routing area update procedure above. In the SGSN relocation procedure, if there is only one SGSN in the list returned by the DNS, the only one SGSN is the new SGSN; if there are multiple SGSNs in the list returned by the DNS, the old SGSN chooses a random SGSN from them as the new SGSN, therefore the Forward Relocation Request need not be forwarded. In addition, in this step, the old SGSN also needs to determine an IP version based on which the Forward Relocation Request is sent to the new SGSN, and the determining process performed by the old SGSN includes either of the following two processes:
sending, if the old SGSN supports the IPv4 only, the Forward Relocation Request including only an IPv4 address to the new SGSN using the IPv4;
or, further determining, if the old SGSN supports IPv4/IPv6 dual-stack protocols, the IP version of the IP address of the new SGSN; sending, if the IP address of the new SGSN is an IPv4 address, the Forward Relocation Request including only an IPv4 address to the new SGSN using the IPv4; or sending, if the new GSN supports IPv4/IPv6 dual-stack protocols, the Forward Relocation Request including only an IPv6 address to the new SGSN using the IPv6.

Step 504: upon receiving the Forward Relocation Request, the new SGSN decides, according to the IP version of the IP address in the request and the IP version supported by the new SGSN itself, to communicate with the old SGSN using an IP version supported by both the new and the old SGSNs, then returns a Forward Relocation Response.

Step 504 is performed in two ways below.

If the new SGSN supports IPv4/IPv6 dual-stack protocols, it determines whether the Forward Relocation Request includes an IPv6 address; if the request includes an IPv6 address, the new SGSN returns a Forward Relocation Response including the IPv6 address of the new SGSN to the old SGSN using the IPv6; otherwise, the new SGSN returns a Forward Relocation Response including the IPv4 address of the new SGSN to the old SGSN using the IPv4.

Optionally, if the new SGSN supports the IPv4 only, it returns the Forward Relocation Response including the IPv4 address of the new SGSN to the old SGSN using the IPv4.

Step 505: the old SGSN determines whether the Forward Relocation Response is received within a predetermined period of time, and Step 506 shall be performed if the response is received; otherwise, Step 507 shall be performed.

Step 506: the old SGSN determines the IP version based on which it communicates with the new SGSN according to the IP version of the IP address in the Forward Relocation Response.

Step 506 further includes: determining, by the old SGSN, whether the IP address included in the received Forward Relocation Response is an IPv6 address; deciding, if the IP address is an IPv6 address, to communicate with the new SGSN using the IPv6, and terminating the process; otherwise, deciding to communicate with the new SGSN using the IPv4, and terminating the process.

Step 507: the old SGSN sends a Forward Relocation Request including only an IPv4 address to the new SGSN using the IPv4 and the process returns to Step 503.

To sum up, intercommunications between different SGSNs supporting different IP versions can be realized through the above procedures. Particularly, when an IPv4/IPv6 dual-stack SGSN sends a request to an opposite SGSN, an appropriate IP version will be determined according to the IP version supported by the opposite SGSN. If the opposite SGSN supports both the IPv4 and the IPv6, the request is sent first using the IP of higher version, i.e., using the IPv6, and when the opposite SGSN returns a response using the IPv6, the communication with the opposite SGSN will continue using the IPv6; otherwise, when the opposite SGSN returns the response using the IPv4, the communication with the opposite SGSN will be based on the IPv4. If the opposite SGSN does not return the response, the request will be sent again using the IP of lower version, i.e., using the IPv4. In this way, the IPv4/IPv6 dual-stack SGSN first detects the IPv6 capability of the opposite SGSN when it wants to communicate with the opposite SGSN, then they communicate with each other according to the detection result where the IPv6 enjoys priority, thus the communication between different SGSNs supporting different IP versions can be realized.

The foregoing is only preferred embodiments of the present invention and is not for use in limiting protection scope thereof. Any change or substitution, within the technical scope of the present disclosure, easily occurring to those skilled in the art should be covered in the protection scope as detailed by the following claims.

## Claims

1. A method for communicating between Serving GPRS, General Packet Radio Service, Support Nodes, SGSNs, applicable to a mobile communication network where SGSNs supporting IPv4, Internet Protocol version 4, and IPv6, Internet Protocol version 6, and SGSNs supporting IPv4 coexist, comprising:
assigning an IPv4 address and an IPv6 address to each SGSN supporting IPv4 and IPv6, and assigning an IPv4 address to each SGSN supporting IPv4,
detecting by a source SGSN, supporting IPv4 and IPv6, an IP version of a destination SGSN (201, 202. 203. 204, 501, 502, 503, 504) when the source SGSN initiates communication to the destination SGSN (201, 202. 203. 204, 501, 502, 503, 504), and
the source SGSN communicating with the destination SGSN using the detected IP version (206); the detecting comprising:
the source SGSN attempting to determine a specific destination SGSN,
if the source SGSN determines the specific destination SGSN:
inquiring about the IP versions assigned to the destination SGSN,
choosing the highest IP version that is supported by both the source SGSN and the destination SGSN for follow-up communication;
if the source SGSN does not determine the specific destination SGSN:
inquiring by the source SGSN about the IP versions of the IP addresses of all routing-related SGSNs,
choosing the lowest IP version supported by both the source SGSN and the routing related SGSNs according to an inquiry result (304, 311),
sending a communication message containing the IP address of the source SGSN of the highest IP version supported by both the source SGSN and at least one of the routing related SGSNs using the chosen lowest IP version (304, 311),
obtaining, by the destination SGSN when the communication message is routed by the routing-related SGSNs to the destination SGSN, the IP versions supported by the source SGSN according to the IP address contained in the communication message,
returning to the source SGSN a message containing the IP address of the destination SGSN of the highest IP version supported by both the source SGSN and the destination SGSN (204),
obtaining, by the source SGSN, the IP version of the IP address contained in the message (204).

2. A method according to Claim 1, further comprising:
before obtaining the IP version of the IP address contained in a SGSN context response, determining, by the source SGSN, whether the SGSN context response returned by the destination SGSN is received within a predetermined period of time (205, 505); if the SGSN content response is received within a predetermined period of time, obtaining the IP version of the IP address contained in the SGSN context response, and communicating with the destination SGSN using the IP version obtained subsequently (206, 506);
if the SGSN content response is not received within a predetermined period of time, sending, by the source SGSN, a SGSN context request using the IPv4 version supported by both the source SGSN and all the routing related SGSNs, wherein the SGSN context request contains an IP address of the highest IP version supported by the source SGSN and at least one of the routing related SGSNs (304, 311); and continuing to determine whether the SGSN context response returned by the destination SGSN is received within a predetermined period of time.

3. A method according to Claim 1, wherein
the IP addresses of the SGSNs are configured in a Domain Name Server, DNS, in accordance with network logical names of the SGSNs;
the source SGSN searches the DNS according to the network logical names of the SGSNs to obtain the IP versions of the IP addresses of the SGSNs.

4. A method according to Claim 3, wherein
the communication initiated by the source SGSN to the destination SGSN is an inter-SGSN routing area update procedure;
the source SGSN is a new SGSN and the destination SGSN is an old SGSN.

5. A method according to Claim 3, wherein
the communication initiated by the source SGSN to the destination SGSN is an inter-SGSN serving radio network controller relocation procedure;
the source SGSN is an old SGSN and the destination SGSN is a new SGSN.

6. A method according to Claim 1, further comprising:
inquiring, by the source SGSN, about an IP address list of the routing related SGSNs of the communication (302);
if there is only one routing related SGSN, determining that the routing related SGSN is a specific destination SGSN (302);
if there are more than one related SGSN, not determining the specific destination SGSN. (302).

7. A method according to Claim 1, wherein a SGSN context response between the source SGSN and the destination SGSN comprises a cell for carrying an IPv6 address.

8. A Serving GPRS, General Packet Radio Service, Support Node, SGSN, system, for a mobile communication network, comprising:
SGSNs supporting IPv4, Internet Protocol version 4, and IPv6, Internet Protocol version 6, and SGSNs supporting IPv4,
means for assigning an IPv4 address and an IPv6 address to each SGSN supporting IPv4 and IPv6, and assigning an IPv4 address to each SGSN supporting IPv4,
detection means for detecting by a source SGSN, supporting IPv4 and IPv6, an IP version of a destination SGSN (201, 202. 203. 204, 501, 502, 503, 504) when the source SGSN initiates communication to the destination SGSN (201, 202. 203. 204, 501, 502, 503, 504), and
communication means for the source SGSN to communicate with the destination SGSN using the detected IP version (206); the detection means being configured such that the detecting comprises:
the source SGSN attempting to determine a specific destination SGSN,
if the source SGSN determines the specific destination SGSN:
inquiring about the IP versions assigned to the destination SGSN,
choosing the highest IP version that is supported by both the source SGSN and the destination SGSN for follow-up communication,
if the source SGSN does not determine the specific destination SGSN:
inquiring by the source SGSN about the IP versions of the IP addresses of all routing-related SGSNs,
choosing the lowest IP version supported by both the source SGSN and the routing related SGSNs according to an inquiry result (304, 311),
sending a communication message containing the IP address of the source SGSN of the highest IP version supported by both the source SGSN and at least one of the routing related SGSNs using the chosen lowest IP version (304, 311), obtaining, by the destination SGSN, when the communication message is routed by the routing-related SGSNs to the destination SGSN, the IP versions supported by the source SGSN according to the IP address contained in the communication message,
returning to the source SGSN a message containing the IP address of the destination SGSN of the highest IP version supported by both the source SGSN and the destination SGSN (204),
obtaining, by the source SGSN the IP version of the IP address contained in the message (204).

9. The SGSN according to Claim 8, further comprising:
means for determining whether a SGSN context response returned by the destination SGSN is received within a predetermined period of time;
wherein means for sending a SGSN context request using the IPv4 version supported by both the source SGSN and all the routing related SGSNs is adapted to send a SGSN context request using the IPv4 version supported by both the source SGSN and all the routing related SGSNs if the SGSN context response is not received within a predetermined period of time.

10. The SGSN according to Claim 8, further comprising:
means for inquiring about an IP address list of the routing related SGSNs of the communication; and
means for determining that the routing related SGSN is a specific destination SGSN if there is only one routing related SGSN.

## Patentansprüche

1. Verfahren zum Kommunizieren zwischen Serving GPRS bzw. General Packet Radio Service Support Nodes SGSN, das auf ein Mobilkommunikationsnetz anwendbar ist, bei dem IPv4 bzw. Internet-Protokoll Version 4 und IPv6 bzw. Internet-Protokoll Version 6 unterstützende SGSN und IPv4 unterstützende SGSN koexistieren, mit den folgenden Schritten:
Vergeben einer IPv4-Adresse und einer IPv6-Adresse an jeden IPv4 und IPv6 unterstützenden SGSN und Vergeben einer IPv4-Adresse an jeden IPv4 unterstützenden SGSN,
Detektieren einer IP-Version eines Ziel-SGSN (201, 202. 203. 204, 501, 502, 503, 504) durch einen Quellen-SGSN, der IPv4 und IPv6 unterstützt, wenn der Quellen-SGSN Kommunikation mit dem Ziel-SGSN (201, 202. 203. 204, 501, 502, 503, 504) einleitet, und
der Quellen-SGSN kommuniziert unter Verwendung der detektierten IP-Version (206) mit dem Ziel-SGSN;
wobei das Detektieren Folgendes umfasst:
der Quellen-SGSN versucht, einen spezifischen Ziel-SGSN zu bestimmen,
wenn der Quellen-SGSN den spezifischen Ziel-SGSN bestimmt:
Anfragen über die an den Ziel-SGSN vergebenen IP-Versionen,
Wählen der höchsten IP-Version, die sowohl von dem Quellen-SGSN als auch dem Ziel-SGSN unterstützt wird, für anschließende Kommunikation,
wenn der Quellen-SGSN den spezifischen Ziel-SGSN nicht bestimmt:
Anfragen durch den Quellen-SGSN über die IP-Versionen der IP-Adressen aller routingbezogenen SGSN,
Wählen der niedrigsten IP-Version, die sowohl von dem Quellen-SGSN als auch den routingbezogenen SGSN unterstützt wird, gemäß einem Anfrageergebnis (304, 311),
Senden einer Kommunikationsnachricht, die die IP-Adresse des Quellen-SGSN der höchsten IP-Version, die sowohl von dem Quellen-SGSN als auch mindestens einem der routingbezogenen SGSN unterstützt wird, enthält, unter Verwendung der gewählten niedrigsten IP-Version (304, 311),
wenn die Kommunikationsnachricht durch die routingbezogenen SGSN zu dem Ziel-SGSN geroutet wird, Erhalten der durch den Quellen-SGSN unterstützten IP-Versionen durch den Ziel-SGSN gemäß der in der Kommunikationsnachricht enthaltenen IP-Adresse,
Zurückgeben einer Nachricht, die die IP-Adresse des Ziel-SGSN der höchsten IP-Version, die sowohl von dem Quellen-SGSN als auch dem Ziel-SGSN unterstützt wird, enthält, an den Quellen-SGSN (204),
Erhalten der IP-Version der in der Nachricht enthaltenen IP-Adresse durch den Quellen-SGSN (204).

2. Verfahren nach Anspruch 1, ferner mit den folgenden Schritten:
vor dem Erhalten der IP-Version der in einer SGSN-Kontextantwort enthaltenen IP-Adresse Bestimmen durch den Quellen-SGSN, ob die durch den Ziel-SGSN zurückgegebene SGSN-Kontextantwort innerhalb eines vorbestimmten Zeitraums empfangen wird (205, 505);
wenn die SGSN-Kontextantwort innerhalb eines vorbestimmten Zeitraums empfangen wird, Erhalten der IP-Version der in der SGSN-Kontextantwort enthaltenen IP-Adresse und Kommunizieren mit dem Ziel-SGSN unter Verwendung der nachfolgend erhaltenen IP-Version (206, 506);
wenn die SGSN-Kontextantwort nicht innerhalb eines vorbestimmten Zeitraums empfangen wird, Senden einer SGSN-Kontextanforderung durch den Quellen-SGSN unter Verwendung der IPv4-Version, die sowohl von dem Quellen-SGSN als auch von allen routingbezogenen SGSN unterstützt wird, wobei die SGSN-Kontextanforderung eine IP-Adresse der höchsten IP-Version enthält, die durch den Quellen-SGSN und
mindestens einen der routingbezogenen SGSN unterstützt wird (304, 311); und weiter Bestimmen, ob die durch den Ziel-SGSN zurückgegebene SGSN-Kontextantwort innerhalb eines vorbestimmten Zeitraums empfangen wird.

3. Verfahren nach Anspruch 1, wobei
die IP-Adressen der SGSN in einem Domain Name Server DNS gemäß logischen Netzwerknamen der SGSN konfiguriert sind;
der Quellen-SGSN den DNS gemäß den logischen Netzwerknamen der SGSN durchsucht, um die IP-Versionen der IP-Adressen der SGSN zu erhalten.

4. Verfahren nach Anspruch 3, wobei
die durch den Quellen-SGSN zu dem Ziel-SGSN eingeleitete Kommunikation eine Routingbereichsaktualisierungsprozedur zwischen SGSN ist;
der Quellen-SGSN ein neuer SGSN und der Ziel-SGSN ein alter SGSN ist.

5. Verfahren nach Anspruch 3, wobei
die durch den Quellen-SGSN zu dem Ziel-SGSN eingeleitete Kommunikation eine Verlagerungsprozedur der versorgenden Funknetzsteuerung zwischen SGSN ist;
der Quellen-SGSN ein alter SGSN und der Ziel-SGSN ein neuer SGSN ist.

6. Verfahren nach Anspruch 1, ferner mit den folgenden Schritten:
Anfragen über eine IP-Adressenliste der routingbezogenen SGSN der Kommunikation durch den Quellen-SGSN (302);
wenn es nur einen routingbezogenen SGSN gibt, Bestimmen, dass der routingbezogene SGSN ein spezifischer Ziel-SGSN ist (302);
wenn es mehr als einen bezogenen SGSN gibt, den spezifischen Ziel-SGSN nicht bestimmen (302).

7. Verfahren nach Anspruch 1, wobei eine SGSN-Kontextantwort zwischen dem Quellen-SGSN und dem Ziel-SGSN eine Zelle zum Führen einer IPv6-Adresse umfasst.

8. System eines Serving GPRS bzw. General Packet Radio Service Support Node SGSN für ein Mobilkommunikationsnetz, umfassend:
IPv4 bzw. Internet-Protokoll Version 4 und IPv6 bzw. Internet-Protokoll Version 6 unterstützende SGSN und IPv4 unterstützende SGSN,
Mittel zum Vergeben einer IPv4-Adresse und einer IPv6-Adresse an jeden IPv4 und
IPv6 unterstützenden SGSN und Vergeben einer IPv4-Adresse an jeden IPv4 unterstützenden SGSN,
Detektionsmittel zum Detektieren einer IP-Version eines Ziel-SGSN (201, 202. 203. 204, 501, 502, 503, 504) durch einen Quellen-SGSN, der IPv4 und IPv6 unterstützt, wenn der Quellen-SGSN Kommunikation mit dem Ziel-SGSN (201, 202. 203. 204, 501, 502, 503, 504) einleitet, und
Kommunikationsmittel, damit der Quellen-SGSN mit dem Ziel-SGSN unter Verwendung der detektierten IP-Version kommunizieren kann (206) wobei die Detektionsmittel so ausgelegt sind, dass das Detektieren Folgendes umfasst:
der Quellen-SGSN versucht, einen spezifischen Ziel-SGSN zu bestimmen,
wenn der Quellen-SGSN den spezifischen Ziel-SGSN bestimmt:
Anfragen über die an den Ziel-SGSN vergebenen IP-Versionen,
Wählen der höchsten IP-Version, die sowohl von dem Quellen-SGSN als auch dem Ziel-SGSN unterstützt wird, für anschließende Kommunikation,
wenn der Quellen-SGSN den spezifischen Ziel-SGSN nicht bestimmt:
Anfragen durch den Quellen-SGSN über die IP-Versionen der IP-Adressen aller routingbezogenen SGSN,
Wählen der niedrigsten IP-Version, die sowohl von dem Quellen-SGSN als auch den routingbezogenen SGSN unterstützt wird, gemäß einem Anfrageergebnis (304, 311),
Senden einer Kommunikationsnachricht, die die IP-Adresse des Quellen-SGSN der höchsten IP-Version, die sowohl von dem Quellen-SGSN als auch mindestens einem der routingbezogenen SGSN unterstützt wird, enthält, unter Verwendung der gewählten niedrigsten IP-Version (304, 311),
wenn die Kommunikationsnachricht durch die routingbezogenen SGSN zu dem Ziel-SGSN geroutet wird, Erhalten der durch den Quellen-SGSN unterstützten IP-Versionen durch den Ziel-SGSN gemäß der in der Kommunikationsnachricht enthaltenen IP-Adresse,
Zurückgeben einer Nachricht, die die IP-Adresse des Ziel-SGSN der höchsten IP-Version, die sowohl von dem Quellen-SGSN als auch dem Ziel-SGSN unterstützt wird, enthält, an den Quellen-SGSN (204),
Erhalten der IP-Version der in der Nachricht enthaltenen IP-Adresse durch den Quellen-SGSN (204).

9. SGSN nach Anspruch 8, ferner umfassend:
Mittel zum Bestimmen, ob eine durch den Ziel-SGSN zurückgegebene SGSN-Kontextantwort innerhalb eines vorbestimmten Zeitraums empfangen wird;
wobei Mittel zum Senden einer SGSN-Kontextanforderung unter Verwendung der IPv4-Version, die sowohl von dem Quellen-SGSN als auch von allen routingbezogenen SGSN unterstützt wird, dafür ausgelegt sind, eine SGSN-Kontextanforderung unter Verwendung der IPv4-Version zu senden, die sowohl von dem Quellen-SGSN als auch allen routingbezogenen SGSN unterstützt wird, wenn die SGSN-Kontextantwort nicht innerhalb eines vorbestimmten Zeitraums empfangen wird.

10. SGSN nach Anspruch 8, ferner umfassend:
Mittel zum Anfragen über eine IP-Adressenliste der routingbezogenen SGSN der Kommunikation; und
Mittel zum Bestimmen, dass der routingbezogene SGSN ein spezifischer Ziel-SGSN ist, wenn es nur einen routingbezogenen SGSN gibt.

## Revendications

1. Procédé de communication entre des noeuds serveurs de support du service GPRS, service général de radiocommunication en mode paquet, dits SGSN, applicable à un réseau de communication mobile dans lequel coexistent des SGSN prenant en charge IPv4, le protocole Internet version 4, et IPv6, le protocole Internet version 6, et des SGSN prenant en charge IPv4, le procédé comprenant les étapes suivantes :
attribution d'une adresse IPv4 et d'une adresse IPv6 à chaque SGSN prenant en charge IPv4 et IPv6, et attribution d'une adresse IPv4 à chaque SGSN prenant en charge IPv4,
détection par un SGSN source, prenant en charge IPv4 et IPv6, d'une version IP d'un SGSN cible (201, 202, 203, 204, 501, 502, 503, 504) lorsque le SGSN source lance une communication vers le SGSN cible (201, 202, 203, 204, 501, 502, 503, 504), et
communication du SGSN source avec le SGSN cible au moyen de la version IP détectée (206) ;
l'étape de détection comprenant les étapes suivantes :
tentative par le SGSN source d'établir un SGSN cible spécifique,
si le SGSN source établit le SGSN cible spécifique :
recherche des versions IP attribuées au SGSN cible,
choix de la version IP la plus élevée prise en charge à la fois par le SGSN source et le SGSN cible pour toute communication subséquente,
si le SGSN source n'établit pas le SGSN cible spécifique :
recherche par le SGSN source des versions IP des adresses IP de tous les SGSN intervenant dans l'acheminement,
choix de la version IP la moins élevée prise en charge à la fois par le SGSN source et les SGSN intervenant dans l'acheminement compte tenu du résultat de la recherche (304, 311),
envoi d'un message de communication contenant l'adresse IP du SGSN source de la version IP la plus élevée prise en charge à la fois par le SGSN source et au moins un des SGSN intervenant dans l'acheminement au moyen de la version IP la moins élevée choisie (304, 311),
obtention, par le SGSN cible, lors de l'acheminement jusqu'au SGSN cible du message de communication par les SGSN intervenant dans l'acheminement, des versions IP prises en charge par le SGSN source compte tenu de l'adresse IP contenue dans le message de communication,
renvoi au SGSN source d'un message contenant l'adresse IP du SGSN cible de la version IP la plus élevée prise en charge à la fois par le SGSN source et le SGSN cible (204),
obtention, par le SGSN source, de la version IP de l'adresse IP contenue dans le message (204).

2. Procédé selon la revendication 1, comprenant en outre les étapes suivantes :
préalablement à l'obtention de la version IP de l'adresse IP contenue dans une réponse de contexte de SGSN, établissement, par le SGSN source, si la réponse de contexte de SGSN renvoyée par le SGSN cible est reçue ou non au sein d'un intervalle de temps préétabli (205, 505) ;
si la réponse de contexte de SGSN est reçue au sein d'un intervalle de temps préétabli, obtention de la version IP de l'adresse IP contenue dans la réponse de contexte de SGSN, et communication avec le SGSN cible au moyen de la version IP ainsi obtenue (206, 506) ;
si la réponse de contexte de SGSN n'est pas reçue au sein d'un intervalle de temps préétabli, envoi par le SGSN source d'une demande de contexte de SGSN au moyen de la version IPv4 prise en charge à la fois par le SGSN source et tous les SGSN intervenant dans l'acheminement, la demande de contexte de SGSN contenant une adresse IP de la version IP la plus élevée prise en charge par le SGSN source et au moins un des SGSN intervenant dans l'acheminement (304, 311) ; et poursuite de l'établissement si la réponse de contexte de SGSN renvoyée par le SGSN cible est reçue ou non au sein d'un intervalle de temps préétabli.

3. Procédé selon la revendication 1,
les adresses IP des SGSN étant configurées dans un serveur de noms de domaine, dit DNS, conformément à des noms logiques de réseau des SGSN ;
le SGSN source explorant le DNS compte tenu des noms logiques de réseau des SGSN en vue d'obtenir les versions IP des adresses IP des SGSN.

4. Procédé selon la revendication 3,
la communication lancée par le SGSN source vers le SGSN cible étant une procédure de mise à jour de zone d'acheminement inter-SGSN ;
le SGSN source étant un nouveau SGSN et le SGSN cible étant un ancien SGSN.

5. Procédé selon la revendication 3,
la communication lancée par le SGSN source vers le SGSN cible étant une procédure de déplacement de contrôleur de réseau de radiocommunication serveur de SGSN ;
le SGSN source étant un ancien SGSN et le SGSN cible étant un nouveau SGSN.

6. Procédé selon la revendication 1, comprenant en outre les étapes suivantes :
recherche, par le SGSN source, d'une liste d'adresses IP des SGSN intervenant dans l'acheminement associés à la communication (302) ;
s'il n'y a qu'un seul SGSN intervenant dans l'acheminement, établissement que le SGSN intervenant dans l'acheminement est un SGSN cible spécifique (302) ;
s'il y a plusieurs SGSN intervenant dans l'acheminement, non-établissement du SGSN cible spécifique (302).

7. Procédé selon la revendication 1, une réponse de contexte de SGSN entre le SGSN source et le SGSN cible comprenant une cellule utilisée pour le transport d'une adresse IPv6.

8. Système de noeuds serveurs de support du service GPRS, service général de radiocommunication en mode paquet, dits SGSN, pour un réseau de communication mobile, comprenant :
des SGSN prenant en charge IPv4, le protocole Internet version 4, et IPv6, le protocole Internet version 6, et des SGSN prenant en charge IPv4,
des moyens d'attribution d'une adresse IPv4 et d'une adresse IPv6 à chaque SGSN prenant en charge IPv4 et IPv6, et d'attribution d'une adresse IPv4 à chaque SGSN prenant en charge IPv4,
des moyens de détection par un SGSN source, prenant en charge IPv4 et IPv6, d'une version IP d'un SGSN cible (201, 202, 203, 204, 501, 502, 503, 504) lorsque le SGSN source lance une communication vers le SGSN cible (201, 202, 203, 204, 501, 502, 503, 504), et
des moyens de communication permettant au SGSN source de communiquer avec le SGSN cible au moyen de la version IP détectée (206) ;
les moyens de détection étant configurés de telle sorte que la détection comprenne les étapes suivantes :
tentative par le SGSN source d'établir un SGSN cible spécifique,
si le SGSN source établit le SGSN cible spécifique :
recherche des versions IP attribuées au SGSN cible,
choix de la version IP la plus élevée prise en charge à la fois par le SGSN source et le SGSN cible pour toute communication subséquente,
si le SGSN source n'établit pas le SGSN cible spécifique :
recherche par le SGSN source des versions IP des adresses IP de tous les SGSN intervenant dans l'acheminement,
choix de la version IP la moins élevée prise en charge à la fois par le SGSN source et les SGSN intervenant dans l'acheminement compte tenu du résultat de la recherche (304, 311),
envoi d'un message de communication contenant l'adresse IP du SGSN source de la version IP la plus élevée prise en charge à la fois par le SGSN source et au moins un des SGSN intervenant dans l'acheminement au moyen de la version IP la moins élevée choisie (304, 311),
obtention, par le SGSN cible, lors de l'acheminement jusqu'au SGSN cible du message de communication par les SGSN intervenant dans l'acheminement, des versions IP prises en charge par le SGSN source compte tenu de l'adresse IP contenue dans le message de communication,
renvoi au SGSN source d'un message contenant l'adresse IP du SGSN cible de la version IP la plus élevée prise en charge à la fois par le SGSN source et le SGSN cible (204),
obtention, par le SGSN source, de la version IP de l'adresse IP contenue dans le message (204).

9. SGSN selon la revendication 8, comprenant en outre :
des moyens d'établissement si une réponse de contexte de SGSN renvoyée par le SGSN cible est reçue ou non au sein d'un intervalle de temps préétabli ;
des moyens d'envoi d'une demande de contexte de SGSN au moyen de la version IPv4 prise en charge à la fois par le SGSN source et tous les SGSN intervenant dans l'acheminement étant conçus pour envoyer une demande de contexte de SGSN au moyen de la version IPv4 prise en charge à la fois par le SGSN source et tous les SGSN intervenant dans l'acheminement, si la réponse de contexte de SGSN n'est pas reçue au sein d'un intervalle de temps préétabli.

10. SGSN selon la revendication 8, comprenant en outre :
des moyens de recherche d'une liste d'adresses IP des SGSN intervenant dans l'acheminement associés à la communication ; et
des moyens d'établissement que le SGSN intervenant dans l'acheminement est un SGSN cible spécifique s'il n'y a qu'un seul SGSN intervenant dans l'acheminement.
